# EUROPEAN PATENT APPLICATION

(11) **EP 3 961 423 A1**
(43) Date of publication of application: **02.03.2022**
(21) Application number: 20795968.5
(22) Date of filing: 11.03.2020
(51) Int. Cl.: G06F 16/332

(54) **INFORMATION PROCESSING METHOD, INFORMATION PROCESSING DEVICE, AND INFORMATION PROCESSING SYSTEM**

(30) Priority: 23.04.2019 CN 201910328210
(71) Applicant: Beijing Jingdong Shangke Information Technology Co., Ltd., Beijing 100086 (CN); Beijing Jingdong Century Trading Co., Ltd., Beijing 100176 (CN)
(72) Inventor: WANG, Hai, Beijing 100086 (CN); XIA, Bo, Beijing 100086 (CN); LI, Maogui, Beijing 100086 (CN); LI, Tao, Beijing 100086 (CN); GAO, Yanlei, Beijing 100086 (CN)
(74) Representative: Witte, Weller & Partner Patentanwälte mbB
(86) International application number: PCT/CN2020/078742
(87) International publication number: WO 2020/215914

(57) **Abstract**

A method, an apparatus and a system of processing information. The method of processing information includes: receiving a first information from the client side; performing a semantic understanding on the first information in response to the first information received, so as to obtain a user intention; determining a business process corresponding to the user intention; obtaining, from the first information and a context information of the first information, an entity information, wherein the entity information is related to the business process corresponding to the user intention; and determining a response information for the first information based on the entity information and the business process corresponding to the user intention and transmitting the response information to the client service side.

## Description

This application claims priority to Chinese patent application No. 201910328210.6, filed on April 23, 2019, the content of which is hereby incorporated by reference in its entirety.

### TECHNICAL FIELD

The present disclosure relates to a field of Internet technology, and more specifically, to a method of processing information, an apparatus of processing information and a system of processing information.

### BACKGROUND

With a rapid development of artificial intelligence, communication and computer technology, robots are increasingly used in many fields such as industrial and agricultural production and daily life. In order to improve a quality of service, a client service of an e-commerce platform may help a client solve a problem encountered through a chat tool.

In the process of implementing the concept of the present disclosure, the inventor found that at least the following problems exist in existing technologies: since businesses of e-commerce involve a variety of businesses such as pre-sales (such as product attribute consultation) and after-sales (such as goods returning and goods changing, etc.), process of involved business is complex. It is impossible to enable the client service to master various businesses by simple training, which fails to effectively improve the quality of the client service.

### SUMMARY

In view of this, according to the present disclosure, a method of processing information, an apparatus of processing information and a system of processing information are provided, which may help improve the service quality of client service.

According to one aspect of the present disclosure, there is provided a method of processing information, applying to a server side, the server side is communicatively connected to a client side and a client service side respectively, and the method include: first, receiving a first information from the client side, performing a semantic understanding on the first information in response to the first information received, so as to obtain a user intention, determining a business process corresponding to the user intention, then, obtaining, from the first information and a context information of the first information, an entity information, the entity information is related to the business process corresponding to the user intention, next, determining a response information for the first information based on the entity information and the business process corresponding to the user intention and transmitting the response information to the client service side.

According to the embodiments of the present disclosure, by identifying the user intention, entering different business scenarios, assisting the client service to complete the response, the client service is not needed to understand the complex business. The response information given combines the entity information of the first information and the context information, and the response information given is more in line with real needs of users, and there is no need for the client service to search a knowledge base during the period, thereby improving efficiency of response and reducing training and service costs.

According to the embodiments of the present disclosure, determining and outputting the response information for the first information may include: building a node tree for each business process, a root node of the node tree corresponds to a user intention, then, determining a type of the root node in the node tree and using the root node as a current node, the type of the root node includes one of: an answer type, a rule type, a sub-process type and a common response type, next, repeating following steps until a type of the current node is the answer type or the common response type: determining a sub-node based on at least one of the entity information, a rule and a sub-process in response to the type of the current node being the rule type or the sub-process type, and using the sub-node as the current node; and determining the type of the current node, then, obtaining a response information for the current node and outputting the response information for the current node to the client service side. It should be noted that a process of building the node tree may be pre-built, that is, it is not necessary to perform the building of the node tree every time the response information is determined. Through the above operations, the response information corresponding to the entity information provided by the user may be automatically obtained, which is more in line with actual needs of the user.

According to the embodiments of the present disclosure, the obtaining a response information for the current node and outputting the response information for the current node to the client service side may include: on one hand, obtaining the response information from a first answer database based on an identifier of the current node in response to the type of the current node being the answer type, and outputting the response information, on the other hand, vectorizing the first information in response to the type of the current node being the common response type, so as to obtain a vectorized first information; using the vectorized first information to match in a second answer database, so as to obtain and output at least one response information.

According to the embodiments of the present disclosure, the method may further include: obtaining a history data of a user of the first information after receiving the first information transmitted from the client side, then, obtaining a user characteristic of the history data of the user, next, obtaining a predicted intention and/or a predicted skill of the user based on the user characteristic, then, determining a current serving client service from a plurality of client services based on a client service characteristic and at least one of the user characteristic, the predicted intention and the predicted skill, next, transmitting the first information to the current serving client service. Through above operations, the client service suitable for the user may be determined based on the history data of the user and the client service characteristic, which is helpful to improve the service quality of the client service.

According to the embodiments of the present disclosure, the history data of the user of the first information includes at least one of: a last consultation content, a recent order, an abnormal order and whether the user is a sensitive customer. In this way, the entity information required by the business process corresponding to the user intention may be effectively extracted.

According to another aspect of the present disclosure, there is provided a method of processing information, applying to a client service side, the client service side is communicatively connected to a server side and a client side respectively, and the method may include: first, receiving a first information and a response information transmitted from the server side, the response information is generated by the server side based on a user intention, an entity information and a business process, the business process corresponds to the user intention of the first information, and the entity information is obtained from the first information and a context information of the first information and the entity information is related to the business process, then, displaying the first information and the response information, next, receiveing a client service operation, transmitting the response information or an information input by a client service to the client side in response to the client service operation.

According to the embodiments of the present disclosure, the client service side may respond to the first information transmitted by the client side based on the response information provided by the server side. The server side recognizes the user intention to get the corresponding business process, and the response information is a response information obtained based on the entity information in the context and the business process. Therefore, it is possible to assist the client service to complete the response in different business scenarios, without requiring the client service to understand the complex business. The response information given is more in line with real needs of users, and there is no need for the client service to search the knowledge base during the period, thereby improving the efficiency of response and reducing training and service costs.

According to the embodiments of the present disclosure, the method may further include: transmitting at least one of the first information, the response information or the information input by the client service to the server side after outputting the response information or the information input by the client service, so that the server side analyzes a client service characteristic of a current serving client service. In this way, it is convenient to implement automatic obtaining of the client service characteristic and is more objective.

According to another aspect of the present disclosure, there is provided an apparatus of processing information, the apparatus may include a first receiving module, an intention obtaining module, a business process determining module, an entity information obtaining module and a response information determining module, the first receiving module is configured to receive a first information from a client side, the intention obtaining module is configured to perform a semantic understanding on the first information in response to the first information received, so as to obtain a user intention, the business process determining module is configured to determine a business process corresponding to the user intention, the entity information obtaining module is configured to obtain, from the first information and a context information of the first information an entity information, the entity information is related to the business process corresponding to the user intention, and the response information determining module is configured to determine a response information for the first information based on the entity information and the business process corresponding to the user intention and transmit the response information to the client service side.

According to the embodiments of the present disclosure, the response information determining module may include: a node type determining sub-module, a recursive sub-module, and an information obtaining sub-module, the node type determining sub-module is configured to determine a type of a root node in a node tree and use the root node as a current node, the type of the root node includes one of: an answer type, a rule type, a sub-process type and a common response type, the recursive sub-module is configurd to repeatedly perform following steps until a type of the current node is the answer type or the common response type: determinig a sub-node based on at least one of the entity information, a rule and a sub-process in response to the type of the current node being the rule type or the sub-process type, and using the sub-node as the current node, and determining the type of the current node, the information obtaining sub-module is configured to obtain a response information for the current node and output the response information for the current node to the client service side.

According to the embodiments of the present disclosure, the response information determining module may further include a node tree building sub-module for building a node tree for each business process, and the root node of the node tree corresponds to the user intention.

According to the embodiments of the present disclosure, the information obtaining sub-module may include: a first obtaining unit and a second obtaining unit, the first obtaining unit is configured to obtain the response information from a first answer database based on an identifier of the current node in response to the type of the current node being the answer type, and output the response information, the second obtaining unit is configured to vectorize the first information in response to the type of the current node being the common response type, so as to obtain a vectorized first information, and the vectorized first information is used for matching in a second answer database to obtain and output at least one response information.

According to the embodiments of the present disclosure, the device may further include a history data obtaining module, a user characteristic obtaining module, a prediction module, a matching module and a routing module. The history data obtaining module is configured to obtain a history data of a user of the first information after receiving the first information transmitted from the client side, the user characteristic obtaining module is configured to obtain a user characteristic of the history data of the user, the prediction module is configured to obtain a predicted intention and/or a predicted skill of the user based on the user characteristic, the matching module is configured to determine a current serving client service from a plurality of client services based on a client service characteristic and at least one of the user characteristic, the predicted intention and the predicted skill, and the routing module is configured to transmit the first information to the current serving client service.

According to the embodiments of the present disclosure, the history data of the user of the first information includes at least one of: a last consultation content, a recent order, an abnormal order and whether the user is a sensitive customer.

According to another aspect of the present disclosure, there is provided an apparatus of processing information, the apparatus may include a second receiving module, a display module, an operation receiving module and an information output module. The second receiving module is configured to receive a first information and a response information transmitted from a server side, the response information is generated by the server side based on a user intention, an entity information and a business process, the business process corresponds to the user intention of the first information, and the entity information is obtained from the first information and a context information of the first information and the entity information is related to the business process, the display module is configured to display the first information and the response information, the operation receiving module is configured to receive a client service operation, and the information output module is configured to transmit the response information or an information input by a client service to a client side in response to the client service operation.

According to the embodiments of the present disclosure, the device may further include a client service information obtaining module, the client service information obtaining module is configured to transmit at least one of the first information, the response information or the information input by the client service to the server side after outputting the response information or the information input by the client service, so that the server side analyzes the client service characteristic of the current serving client service.

According to another aspect of the present disclosure, there is provided a system of processing information, the system may include a dialogue management module, an intention recognition module, a business model module and an answer module. The dialogue management module is configured to obtain a first information, a context information of the first information and an entity information and output a response information for the first information, the intention recognition module configured to obtain a user intention based at least on the first information, the business model module configured to determine a business process based at least on the first information and the user intention, and the answer module configured to determine the response information for the first information based on the business process and the entity information.

According to the embodiments of the present disclosure, the system may further include an intelligent scheduling module, and the intelligent scheduling module is configured to determine a matching relationship between an intention and a skill based on a history consultation data of the user through the user intention and a service content of the client service, and a suitable client service for the user is determined based on the matching relationship.

According to the embodiments of the present disclosure, the system may further include a routing module, the routing module is configured to establish a connection between the client side and the client service and to deliver information between the server side, the client side and the client service side.

According to another aspect of the present disclosure, there is provided a computer system, including one or more processors, and a storage device, the storage device is configured to store an executable instruction, and the executable instruction, when executed by a processor, is configured to implement the method above mentioned.

According to another aspect of the present disclosure, there is provided a computer-readable storage medium having a computer-executable instruction stored thereon, and the instruction, when executed, is configured to implement the method above mentioned.

According to another aspect of the present disclosure, there is provided a computer program, the computer program includes a computer-executable instruction, and the instruction, when executed, is configured to implement the method above mentioned.

### BRIEF DESCRIPTION OF THE DRAWINGS

Through the following description of the embodiments of the present disclosure with reference to the drawings, the above and other objectives, features and advantages of the present disclosure will be more apparent. In the drawings:
FIG. 1A schematically illustrates an application scenario of a method of processing information, an apparatus of processing information and a system of processing information according to the embodiments of the present disclosure;
FIG. 1B schematically illustrates a schematic diagram of a system architecture according to the embodiments of the present disclosure;
FIG. 2A schematically illustrates a flowchart of a method of processing information for a server side according to the embodiments of the present disclosure;
FIG. 2B schematically illustrates an information flow diagram of a method of processing information for a server side according to the embodiments of the present disclosure;
FIG. 3A schematically illustrates a flowchart of determining and outputting a response information for a first information according to the embodiments of the present disclosure;
FIG. 3B schematically illustrates a flowchart of obtaining a response information for a current node according to the embodiments of the present disclosure;
FIG. 4 schematically illustrates a flowchart of a method of processing information for a server side according to the embodiments of the present disclosure;
FIG. 5A schematically illustrates a flowchart of a method of processing information for a client service side according to the embodiments of the present disclosure;
FIG. 5B schematically illustrates a flowchart of a method of processing information for a client service side according to the embodiments of the present disclosure;
FIG. 6A schematically illustrates a block diagram of an apparatus of processing information according to the embodiments of the present disclosure;
FIG. 6B schematically illustrates a block diagram of an apparatus of processing information according to the embodiments of the present disclosure;
FIG. 7A schematically illustrates a block diagram of a system of processing information according to the embodiments of the present disclosure;
FIG. 7B schematically illustrates a schematic diagram of an information flow of a system of processing information according to the embodiments of the present disclosure;
FIG. 7C schematically illustrates a logic diagram of a dialogue management module according to the embodiments of the present disclosure;
FIG. 7D schematically illustrates a logic diagram of an intention recognition module according to the embodiments of the present disclosure;
FIG. 7E schematically illustrates a logic schematic diagram of a business model module according to the embodiments of the present disclosure;
FIG. 7F schematically illustrates a logic diagram of an answer module according to the embodiments of the present disclosure;
FIG. 7G schematically illustrates a logic schematic diagram of an intelligent scheduling module according to the embodiments of the present disclosure; and
FIG. 8 schematically illustrates a block diagram of a computer system for implementing information processing according to the embodiments of the present disclosure.

### DETAILED DESCRIPTION OF EMBODIMENTS

Hereinafter, the embodiments of the present disclosure will be described with reference to the drawings. However, it should be understood that these descriptions are only exemplary, and are not intended to limit the scope of the present disclosure. In the following detailed description, for ease of explanation, many specific details are set forth to provide a comprehensive understanding of the embodiments of the present disclosure. However, it may be understood that one or more embodiments may also be implemented without these specific details. In addition, in the following description, descriptions of well-known structures and technologies are omitted to avoid unnecessarily obscuring the concept of the present disclosure.

The terms used here are only for describing specific embodiments, and are not intended to limit the present disclosure. The terms "include", "comprise", etc. used herein indicate an existence of described characteristics, steps, operations and/or components, but do not exclude a presence or addition of one or more other characteristics, steps, operations or components.

Unless otherwise defined, all terms (including technical and scientific terms) used herein have the meanings commonly understood by those skilled in the art. It should be noted that the terms used here should be interpreted as having meanings consistent with the context of the specification, and should not be interpreted in an idealized or overly rigid manner.

In the case of using an expression similar to "at least one of A, B, C, etc.", generally speaking, it should be interpreted according to the meaning of the expression commonly understood by those skilled in the art (for example, "a system having at least one of A, B, and C" shall include, but is not limited to, a system having A alone, B alone, C alone, A and B, A and C, B and C, and/or A, B and C, etc.). In the case of using an expression similar to "at least one of A, B, or C, etc.", generally speaking, it should be interpreted according to the meaning of the expression commonly understood by those skilled in the art (for example, "a system having at least one of A, B, or C" shall include but is not limited to a system having A alone, B alone, C alone, A and B, A and C, B and C, and/ or A, B and C, etc.).

In order to meet a process of recommending an answer to a client service, a server side needs to provide a supported robot to understand information transmitted by the client and give a response information. Finally the response information is transmitted to the client side through the client service or the robot. As an auxiliary type of robot, all response information is transmitted to the client side after a manual click. The robot mainly performs auxiliary responses in this process.

At present, main client service response assistant tools are mainly divided into two ways, the first is an answer word recommendation, and the second is an official word search. Regarding to the word recommendation, a customer intention is recognized during the process of speaking, and the response answer is matched from an answer database by a machine learning model, the response answer is recommended to the client service, and the response answer is transmitted to the customer after the client service clicks the response answer. Regarding the word search, a knowledge base is established, and the client service understands what the client said. Then the client service searches the knowledge base for related words, clicks the related words and transmits the related words to the client.

The answer recommended by existing words is a static answer, and the process is fixed and may not be flexibly configured. If the client asks: When will my XX order arrive? The recommended answer in this case may be: I'm very sorry that your order is still in delivery, please wait patiently. In this case, the client is not clearly informed a desired answer, but simple reassurance is carried out, which may not really meet the need of the client and reduces the usability of the system.

The answer to the existing word search is a fixed answer, which requires understanding the complex business manually. If the client asks: May I return this product? At this time, the client service may need to understand that the client is thinking of returning the product, and search the knowledge base for: returning process. In complex scenarios, it may be a return process when the order status is not received and a return process when the order status is received, etc. It is more complicated and requires repeated confirmation and constant search by the client service, which greatly reduces the timeliness of reception.

According to the embodiments of the present disclosure, there is provided a method of processing information, an apparatus of processing information and a system of processing information. The method includes a process of determining business process and a process of determining response information. In the process of determining business process, a user intention of a first information received is firstly determined, and then a business process corresponding to the user intention is determined. After the process of determining business process is completed, the process of determining response information is performed, and a response information for the first information is determined based on the business process and an entity information included in the first information.

In addition, the embodiments of the present disclosure may allocate a client service dynamically through a service skill tag and a resource of the client service. The process and answer are configured by a small number of professionals who know the specific business, so as to perform a recommendation of a standardized answer to the client service according to business, the client service clicks and transmits the answer to the client side according to steps. During this period, the client service does not need to understand too much business, which may effectively reduce a training cost, so as to perform a reasonable distribution of flow, a unification of process and a standardization of response.

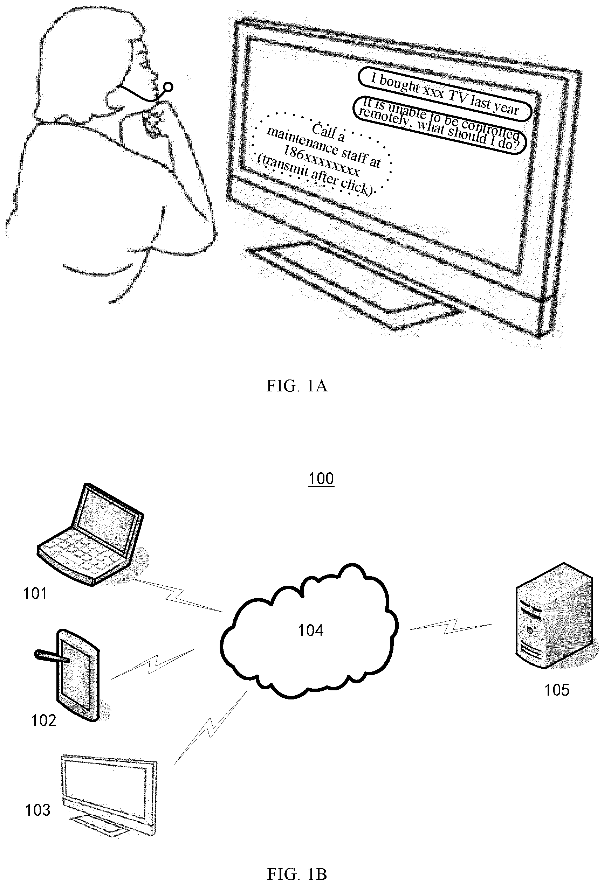

FIG. 1A schematically illustrates an application scenario of a method of processing information, an apparatus of processing information and a system of processing information according to the embodiments of the present disclosure. It should be noted that FIG. 1A is only an example of application scenarios in which the embodiments of the present disclosure may be applied to help those skilled in the art understand the technical content of the present disclosure, but it does not mean that the embodiments of the present disclosure may not be used in other apparatuses, systems, environments or scenarios.

As shown in FIG.1A, when a client service staff provides a consulting service to a user, the client service staff may face a variety of users and problems involving a variety of business processes. The client service staff may not deal with problems of various users when receiving a small amount of training. A xxx TV bought by the user in FIG. 1A can not be remotely controlled. The client service staff is asked how to deal with this problem, which may involve a repairing business process, a returning business process or a replacing business process of electrical appliance, and whether the TV is in a guaranteed replacement period, a warranty period, etc. also need to be considered. The processing flow for different brands of TV may be different, therefore, the client service staff needs to have a better understanding of the corresponding business process so as to better guide the user to adopt an appropriate response strategy. For example, the client service staff needs to inquire about the relevant business process of xxx brand TV in the knowledge base, which causes a long waiting time for the user. In the method of processing information provided by the present disclosure, the server side may perform a semantic understanding on a question transmitted by the user to obtain a user intention, such as electronic device maintenance. A corresponding business process is determined, and then a response information based on an entity information related to the business process is determined. The entity information may be extracted from a context, so that an answer desired by the user: Call a maintenance staff at 186xxxxxxxx, may be obtained based on the business process and the entity information and the answer is pushed to the client service. When the client service confirms that there is no problem, the answer may be transmitted to the user.

FIG. 1B schematically illustrates a schematic diagram of a system architecture according to the embodiments of the present disclosure.

As shown in FIG. 1B, the system architecture 100 according to the embodiments may include terminal devices 101, 102, 103, a network 104 and a server 105. The network 104 is used to provide a medium for communication links between the terminal devices 101, 102, 103 and the server 105. The network 104 may include various connection types, such as wired communication links, wireless communication links, or fiber optic cables, and so on.

The user may use the terminal devices 101, 102, 103 to interact with the server 105 through the network 104 to receive or transmit messages and so on. Various communication client applications may be installed on the terminal devices 101, 102, 103, such as shopping applications, web browser applications, search applications, instant messaging tools, email clients, social platform software, etc. (only examples).

The terminal devices 101, 102, 103 may be various electronic devices with a display screen and supporting web browsing, including but not limited to smart phones, tablet computers, laptop computers, desktop computers, Internet TVs and so on.

The server 105 may be a server that provides various services, such as a background management server (only an example) that responds to information transmitted by the user using the terminal devices 101, 102, and 103. The background management server may analyze and process a received user request and other data, and a processing result (for example, webpage, information, or data obtained or generated according to the user request) is fed back to the terminal device.

It should be noted that the terminal devices 101, 102, and 103 may be used as a client side or a client service side, and an auxiliary robot allocated by the server side may be used on the client service side.

It should be understood that the numbers of terminal devices, networks and servers are merely illustrative. According to implementation needs, there may be any number of terminal devices, networks and servers.

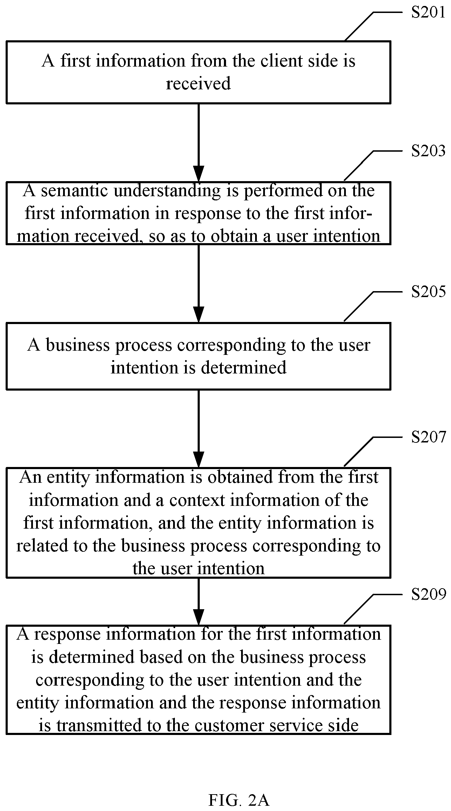

FIG. 2A schematically illustrates a flowchart of a method of processing information for a server side according to the embodiments of the present disclosure. The method is suitable for the server side, and the server side is communicatively connected to the client side and the client service side respectively.

As shown in FIG. 2A, the method includes operation S201 to operation S209.

In operation S201, a first information from the client side is received.

In the embodiment, the first information may be a consultation information, a small chat information, etc. transmitted by the user to a client service.

In operation S203, a semantic understanding is performed on the first information in response to the first information received, so as to obtain a user intention.

A structure of a dialogue is like this: in the dialogue, the user may ask a plurality of questions, and the client service or robot may also provide a plurality of response information. Thus, the plurality of questions may involve a plurality of intentions. For example, the client may firstly ask in a dialogue: Why my goods have not arrived yet, the corresponding user intention may be: order reminding. Then the client asked again: Not yet, let me change a product. The user intention at this time may be: goods changing.

In a specific embodiment, the semantic understanding may be performed on the first information based on a pre-trained semantic procedural model, so as to obtain the user intention. The semantic procedural model includes but is not limited to: multiclass neural network, deep neural network, convolutional neural network, adversarial neural network, long short term memory neural network and so on. It should be noted that the first information transmitted by the client may be identified as a plurality of user intentions. For example, the client transmitted a information: "What about the invoice". After the semantic understanding, a format for returning user intentions may be: [{making up invoice, 0.9999}, {modifying invoice, 0.1999}, {not requiring invoice, 0.0099}], the plurality of user intentions are returned, and the number is a probability of the user intention. Generally, a threshold, such as 0.8, is set. When the probability of the user intention is greater than 0.8, the user intention may be returned.

In operation S205, a business process corresponding to the user intention is determined.

The business process may be a process and an answer configured by a professional who knows the specific business process, where each business process may correspond to one user intention.

In operation S207, an entity information is obtained from the first information and a context information of the first information, and the entity information is related to the business process corresponding to the user intention.

A business process usually needs a support of a plurality of entity information. For example, the changing business needs the user's receiving address, recipient, recipient's contact information, receiving time and other entity information to ensure a smooth progress of the business. In the communication process between the client and the client service, the entity information may exist in previous chat records or may be obtained after the client service guides the client. Therefore, the entity information should be obtained from the first information and the context information of the first information. The entity information needed by the business process may be transmitted from the server side to the client service side to prompt the client service.

In operation S209, a response information for the first information is determined based on the business process corresponding to the user intention and the entity information and the response information is transmitted to the client service side.

In the embodiment, the server side may transmit accurate response information to the client service side, or the server side may transmit a plurality of possible response information to the client service side, and then the client service selects the best response information from the plurality of possible response information and transmits the response information to the client side.

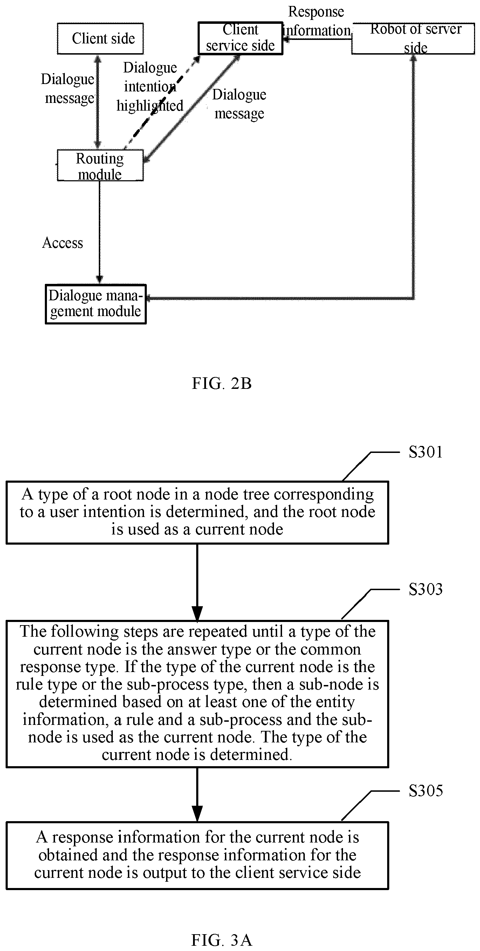

FIG. 2B schematically illustrates an information flow diagram of a method of processing information for a server side according to the embodiments of the present disclosure.

As shown in FIG. 2B, the client side initiates a dialogue and establishes a connection with the client service side. A routing module is responsible for information interaction among the three sides by: delivering a dialogue message to the client service side for display. The dialogue management module performs intention identification on the first information transmitted by the client side. If the user intention is recognized, then an event message is transmitted to the client service side, and the recognized user intention is highlighted for reminding the client service. When the client service clicks the first information or receives the user intention, an auxiliary robot pops up. The auxiliary robot obtains the response information according to a rule corresponding to the first information, the context information of the first information and the user intention (such as history information and information provided by the user guided by the client service), the response information is returned to the client service side, and the client service transmits the response information or the information input by himself to the client side.

FIG. 3A schematically illustrates a flowchart of determining and outputting a response information for a first information according to the embodiments of the present disclosure.

As shown in FIG. 3A, determining and outputting the response information for the first information may include operations S301 to S305.

In operation S301, a type of a root node in a node tree corresponding to a user intention is determined and the root node is used as a current node. The type of the root node includes one of: an answer type, a rule type, a sub-process type and a common response type.

In the embodiment, the node tree may be built based on the business process. For example, the node tree is built according to the business process in advance, or the node tree is built according to the business process when the response information for the first information needs to be determined, or the node tree is built according to the business process when the involved business process does not have a corresponding node tree. The root node of the node tree corresponds to a user intention, that is, the corresponding node tree is determined based on the user intention, and the type of the root node of the node tree is determined.

In one embodiment, the corresponding relationship between the user intention and the business process is confirmed in advance. For example, an auxiliary robot assigned to a client service only involves the business process of mobile phones and small chats and may not answer questions of computer business process. Then the business process corresponding to the user intention that the client service could handle may only include: mobile phone consultation, mobile phone product returning, mobile phone product changing, etc. After the user intention is determined, the business process needed by the client may be confirmed, and the node tree corresponding to the business process may be obtained. The node tree is a configuration. After entering a certain node tree, the node tree is performed.

In operation S303, the following steps are repeated until a type of the current node is the answer type or the common response type. If the type of the current node is the rule type or the sub-process type, then a sub-node is determined based on at least one of the entity information, a rule and a sub-process, and the sub-node is used as the current node. The type of the current node is determined.

For example, each user intention has a single value in the node tree, which is used to identify the root node and determine whether it is needed to enter a root node of a new node tree (for example, whether a new information transmitted from the client side has a new user intention). If it is needed to enter a root node of a new node tree, then the root node of the node tree corresponding to the new user intention is entered, if it is not needed to enter a root node of a new node tree, then a sub-node of the node tree corresponding to the user intention of the last dialogue is located, and the node type of the sub-node is determined. The types of the node are divided into: the answer type, the rule type, the sub-process type (such as a general rule type, which is reusable) and the common response type (such as frequently asked questions (FAQ) type). Whether the sub-node is the rule type or the sub-process type is determined. If the sub-node is the rule type or the sub-process type, then the hitted sub-node is determined according to the rule, and then the identifier of the sub-node is returned to enter the sub-node. This process is a recursive process until the type of the sub-node is the answer type or the common response type.

In operation S305, a response information for the current node is obtained, and the response information for the current node is output to the client service side.

In the embodiment, after the operation S303, the finally obtained sub-node is the answer type or the common response type. At this time, the response information corresponding to the sub-node of the answer type or a polite reply term corresponding to the common response type may be called and used as the response information for the first information.

It should be noted that after the user intention is determined, if the user intention is the user intention of small chat, then the node tree corresponding to the small chat will be performed. For example, the user transmits an information: Have you had a meal? The server side will provide a response information: It's only xx clock, I haven't had a meal yet. For another example, if the user intention is the user intention of returning a mobile phone product, the server may search for the response information in an answer database based on the identifier of the node of the node tree corresponding to the user intention of returning the mobile phone product. For example, the answer may be: Please mail to an address xxx for returning the product, this product supports returning in 7 days without any reason. The response information in the answer database may be manually configured.

In addition, the response information may be combined with or without the entity information, but the entity information during the dialogue will be passed down to answer layer.

For example, in the business process involved, the user gave an information: my delivery address is xxxx. The server side may use an entity [delivery address]. For example, if the server side needs to use the entity [delivery address] in a subsequent goods changing business process, then the server side may transmit an information: please confirm whether your delivery address is xxxx, if yes, click [Yes], if no, click [No]. This may effectively improve communication efficiency.

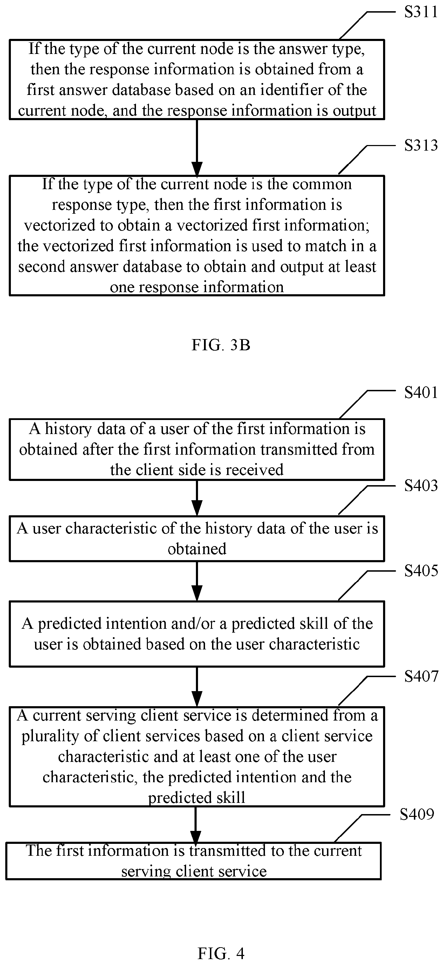

FIG. 3B schematically illustrates a flowchart of obtaining a response information for the current node according to the embodiments of the present disclosure.

As shown in FIG. 3B, the obtaining a response information for the current node and outputting the response information for the current node to the client service side may include operations S311 to S313.

In operation S311, if the type of the current node is the answer type, then the response information is obtained from a first answer database based on an identifier of the current node, and the response information is output.

For example, an answer service model is directly called. Specifically, it is determined whether the type of the current node is the answer type or FAQ type based on the context of the first information. If the type of the current node is the answer type, then the final response information is obtained from the cache according to the identifier of the node, and the identifier of the node is returned by the sub-node of the node tree corresponding to the business type. The response information is stored in a persistent answer layer after manual editing and review, and each identifier of the node corresponds to one response information.

In operation S313, if the type of the current node is the common response type, then the first information is vectorized to obtain a vectorized first information. The vectorized first information is used for matching in a second answer database to obtain and output at least one response information.

In the embodiment, if the type of the current node is not the answer type, it is the FAQ type. The first information is vectorized, a text similarity match is performed on the vectorized first information with a preset question-answer pair, so that TOP N pieces of candidate response information are retrieved. The candidate response information is reordered, one or more response information are selected according to a preset threshold, and the response information is returned.

FIG. 4 schematically illustrates a flowchart of a method of processing information for the server side according to the embodiments of the present disclosure.

As shown in FIG. 4, the method may further include operations S401 to S409.

In operation S401, a history data of a user of the first information is obtained after the first information transmitted from a client side is received.

In the embodiment, the user of each client side usually has a user identifier. After the user uses the user identifier to log in to a shopping application and uses the online client service tool of the shopping application for question consultation, the history data of the user may be obtained according to the user identifier.

The history data of the user of the first information includes at least one of: a last consultation content, a recent order, an abnormal order, and whether the user is a sensitive customer and so on.

In operation S403, a user characteristic of the history data of the user is obtained.

For example, the user characteristic may include purchasing power, endurance, complaint rate of user and whether there are abnormal orders, etc.

In operation S405, a predicted intention and/or a predicted skill of the user is obtained based on the user characteristic.

For example, if the user has recently purchased a mobile phone, then the communication between the user and the client service may be related to the mobile phone, for example, mobile phone returning, mobile phone changing, mobile phone repairing and so on. For another example, if the endurance of the user is low, for example, the user has complained many times, then the user needs a more proficient and patient client service to provide services.

In operation S407, a current serving client service is determined from a plurality of client services based on a client service characteristic and at least one of the user characteristic, the predicted intention and the predicted skill.

In the embodiment, at least one of the user characteristic, the predicted intention and the predicted skill is matched with the client service characteristic corresponding to each client service stored in the database to obtain a suitable client service.

The client service characteristic may be data stored in the server. The client service characteristic is mainly composed of client service portraits, such as a resolution rate of history reception users, an emotion changing curve of history reception users, a history satisfaction degree of the client service and a skill group tag where the client service is good at answering, etc.

The matching may include a preliminary filter process and a filter process, for example, a skill intention model is automatically built based on an intention and skill pair in advance. For example, the intention and skill pair is obtained based on the user intention and the service content of the client service, and the user intention is obtained from history consultation information of a user that the client service has served.

When the first information transmitted by the client side is received, the client service characteristic is called.

Next, the preliminary filter is performed based on the user characteristic of the user corresponding to the first information, the client service characteristic and the skill intention model to obtain at least one pair of matching options.

Then, the at least one pair of matching options is filtered again based on a characteristic model, such as a characteristic algorithm model, to obtain a current serving client service. The characteristic algorithm model may be used to determine the current serving client service based on currently idle client services, the matching degree ranking of the at least one pair of matching options, and the like.

In operation S409, the first information is transmitted to the current serving client service.

In a specific embodiment, the user characteristic is mainly composed of user portraits, including history consultation intentions, basic personal information and so on. The server may select some consultation-related characteristics from the history database of the user, such as a last consultation content, a recent order, an abnormal order, and whether the user is a sensitive client, etc. Then, the following information is predicted through an algorithmic model for skills and intentions. A question and an intention that the client may consult is firstly determined. Then what skill the client service may be needed to respond to the problem is determined, so that a plurality of groups of eligible reception client services are selected. Then, the current serving client service is determined by the characteristic algorithm model through the client service characteristic, the user characteristic, the predicted intention and the predicted skill, etc. Then, a network link between the client and the client service is established. After the link is established, the client and the client service may transmit information with each other.

Through the above method, a currently suitable client service may be determined based on the history data of the user and the client service characteristic, so as to improve user satisfaction.

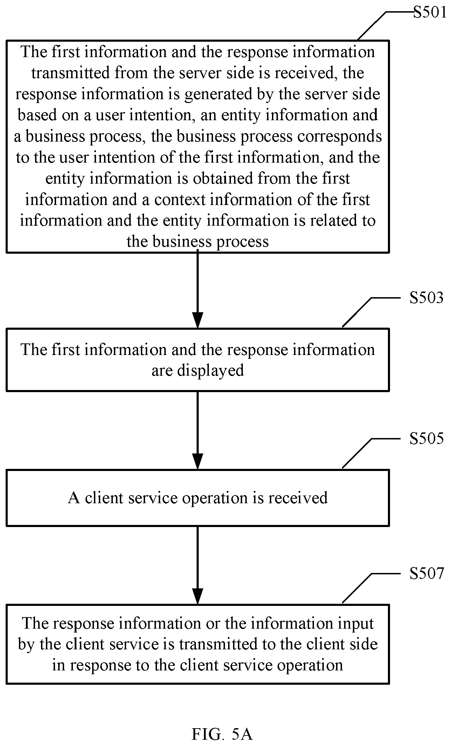

FIG. 5A schematically illustrates a flowchart of a method of processing information for a client service side according to the embodiments of the present disclosure. The client service side is communicatively connected to a server side and a client side respectively.

As shown in FIG. 5A, the method may include operations S501 to S507. It should be noted that the process of the server determining the response information for the first information transmitted by the user through the client side may refer to the content disclosed above, which will not be repeated here.

In operation S501, the first information and the response information transmitted from the server side is received, the response information is generated by the server side based on a user intention, an entity information and a business process, the business process corresponds to the user intention of the first information, and the entity information is obtained from the first information and a context information of the first information and the entity information is related to the business process.

It should be noted that the server side may mark the detected user intention on the first information and then transmit the first information to the client service side, for example, the user intention may be displayed in a highlighted manner. In addition, it is also possible to display the user intention after the client service clicks on the first information. And then, after the client service clicks on a certain user intention, the response information corresponding to the user intention is displayed.

In operation S503, the first information and the response information are displayed.

In operation S505, a client service operation is received.

The client service operation may be a response information transmitted for the server side, or an information input by the client service, or an information request transmitted for the server side.

In operation S507, the response information or the information input by the client service is transmitted to the client side in response to the client service operation.

In the method of processing information provided in the present disclosure,
the business process and the response information are configured by a small number of professionals who know the specific business. The standardized answers for business recommendations are implemented, which may effectively reduce training costs, thereby implementing the reasonable distribution of flow, the unification of processes, the standardization of responses and the improvement of service efficiency.

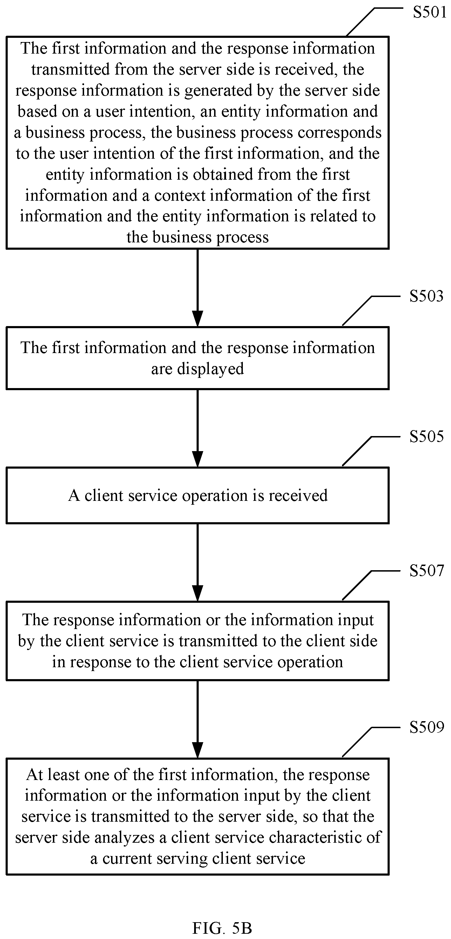

FIG. 5B schematically illustrates a flowchart of a method of processing information for a client service side according to the embodiments of the present disclosure.

As shown in FIG. 5B, the method may further include operation S509.

In operation S509, after the response information or the information input by the client service is output, at least one of the first information, the response information, or the information input by the client service is transmitted to the server side, so that the server side analyzes a client service characteristic of a current serving client service.

The client service characteristic is mainly composed of client service portraits, which are extracted based on the history service information of the client service. For example, the client service characteristica may be a resolution rate of history reception users, an emotion changing curve of history reception users, a history satisfaction degree of the client service and a skill group tag where the client service is good at answering, etc.

It should be noted that, after the server side analyzes and obtains the client service characteristic of the current serving client service, the client service characteristic may be stored in the personal information database of the client service, so that the server may call the client service characteristic.

In the method of processing information provided in the present disclosure, the client service characteristic is obtained by analyzing the history service information of the client service, the pairing of intention and skill tag is actively mined, and the user and the client service are automatically modeled. In this way, when the server receives the first information transmitted by the client side, it is convenient to use the rule and the algorithm to perform prediction, so as to perform the assignment of different users to different client services, and to ensure the timeliness and satisfaction of the reception.

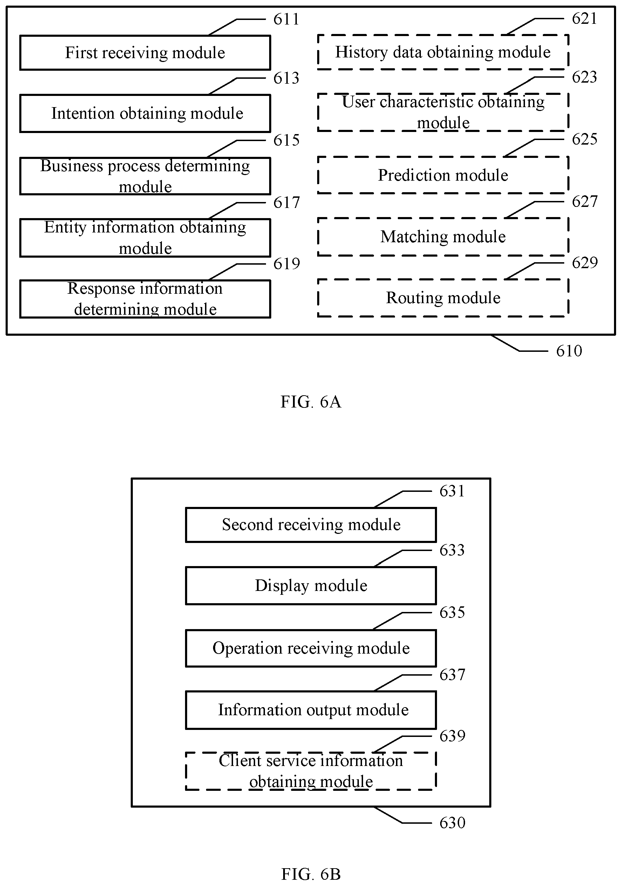

FIG. 6A schematically illustrates a block diagram of an apparatus of processing information according to the embodiments of the present disclosure.

As shown in FIG. 6A, the apparatus of processing information 610 may include a first receiving module 611, an intention obtaining module 613, a business process determining module 615, an entity information obtaining module 617 and a response information determining module 619.

The first receiving module 611 is used to receive a first information from a client side.

The intention obtaining module 613 is used to perform a semantic understanding on the first information in response to the first information received, so as to obtain a user intention.

The business process determining module 615 is used to determine a business process corresponding to the user intention.

The entity information obtaining module 617 is used to obtain, from the first information and a context information of the first information, an entity information, and the entity information is related to the business process corresponding to the user intention.

The response information determining module 619 is used to determine a response information for the first information based on the entity information and the business process corresponding to the user intention and transmit the response information to the client service side.

In the embodiment, the response information determining module 619 may include: a node type determining sub-module, a recursive sub-module and an information obtaining sub-module.

The node type determining sub-module is used to determine a type of a root node in a node tree and use the root node as a current node. The type of the root node includes one of: an answer type, a rule type, a sub-process type and a common response type.

The recursive sub-module is used to repeatedly perform the following steps until a type of the current node is the answer type or the common response type. If the type of the current node is the rule type or the sub-process type, a sub-node is determined based on at least one of the entity information, a rule and a sub-process, the sub-node is used as the current node, and the type of the current node is determined. The information obtaining sub-module is used to obtain a response information for the current node and output the response information for the current node to the client service side.

In another embodiment, the response information determining module 619 may further include a node tree building sub-module, which is used to build a node tree for each business process, and a root node of the node tree corresponds to one user intention.

The information obtaining sub-module may include: a first obtaining unit and a second obtaining unit.

The first obtaining unit is used to obtain the response information from a first answer database based on an identifier of the current node when the type of the current node is the answer type, and output the response information.

The second obtaining unit is used to vectorize the first information when the type of the current node is the common response type, so as to obtain a vectorized first information. The vectorized first information is used for matching in a second answer database to obtain and output at least one response information.

In another embodiment, the apparatus 610 may further include a history data obtaining module 621, a user characteristic obtaining module 623, a prediction module 625, a matching module 627 and a routing module 629.

The history data obtaining module 621 is used to obtain a history data of a user of the first information after the first information transmitted from the client side is received.

The user characteristic obtaining module 623 is used to obtain a user characteristic of the history data of the user.

The prediction module 625 is used to obtain a predicted intention and/or a predicted skill of the user based on the user characteristic.

The matching module 627 is used to determine a current serving client service from a plurality of client services based on a client service characteristic and at least one of the user characteristic, the predicted intention, the predicted skill.

The routing module 629 is used to transmit the first information to the current serving client service.

Specifically, the history data of the user of the first information includes at least one of: a last consultation content, a recent order, an abnormal order and whether the user is a sensitive customer.

FIG. 6B schematically illustrates a block diagram of an apparatus of processing information according to the embodiments of the present disclosure.

As shown in FIG. 6B, the apparatus 630 may include a second receiving module 631, a display module 633, an operation receiving module 635 and an information output module 637.

The second receiving module 631 is used to receive a first information and a response information transmitted from a server side, the response information is generated by the server side based on a user intention, an entity information and a business process. The business process corresponds to the user intention of the first information. The entity information is obtained from the first information and a context information of the first information and the entity information is related to the business process.

The display module 633 is used to display the first information and the response information.

The operation receiving module 635 is used to receive a client service operation.

The information output module 637 is used to transmit the response information or an information input by a client service to a client side in response to the client service operation.

It should be noted that the apparatus 630 may further include a client service information obtaining module 639. The client service information obtaining module 639 is used to transmit at least one of the first information, the response information or the information input by the client service to the server side after the response information or the information input by the client service is output, so that the server side may analyze a client service characteristic of a current serving client service.

The operations performed by the apparatus 610 and the apparatus 630 shown in FIGS. 6A to 6B may refer to the corresponding content in the method of processing information described above.

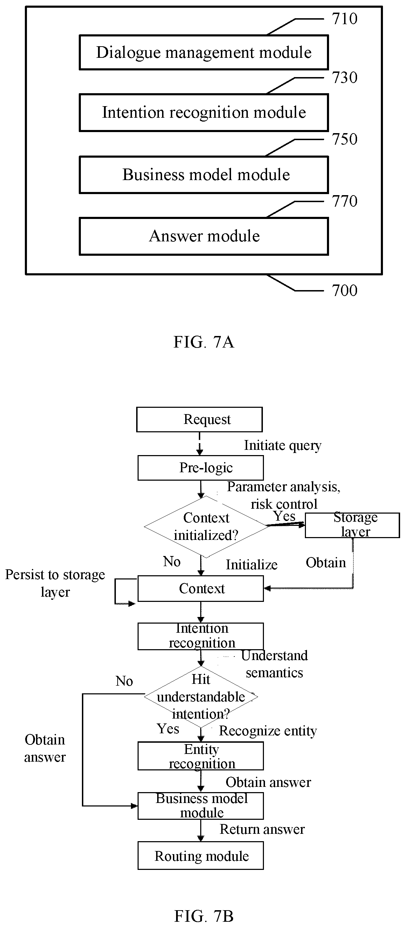

FIG. 7A schematically illustrates a block diagram of a system of processing information according to the embodiments of the present disclosure.

As shown in FIG. 7A, the system 700 may include a dialogue management module 710, an intention recognition module 730, a business model module 750 and an answer module 770.

The dialogue management module 710 is used to obtain a first information, a context information of the first information and an entity information and output a response information for the first information.

FIG. 7B schematically illustrates a logic diagram of a dialogue management module according to the embodiments of the present disclosure.

As shown in FIG. 7B, first, the client or the client service makes a dialogue (a single piece), and a request (Query) is initiated. The information includes a chat content, an entity information such as an inquiried order invoice and other information of the input parameter. Then, the input parameter is parsed, and a pre-logic processing is performed, for example, whether the request is legitimate is determined, the black and white list for user is determined and so on. Next, whether a context has been initialized is checked. If the context has not been initialized, then the context is obtained from a storage layer, where the context may be divided into three types, for example, a robot context, a dialogue context and a request context, which are mainly information storage and transmission. Then, the context information is updated. Next, an intention of sentence is analyzed, where the intention is divided into three layers. For example, a multiclass neural network model is used for implementation and finally the user intention, such as "invoice type-replenishment invoice", is obtained. Then, it is determined whether the user intention may be understood. If the user intention may not be understood, then FAQs and other bottom words are recommended. If the user intention may be understood, then an entity recognition is performed. The process of entity recognition is to extract the entity information, such as an address, order number, mobile phone number, etc., needed by an intention form through rules and models. The intention form is a task form, for example, when a user is registered, a user name and a password need to be input. Here {user name} and {password} are the {entity} of the {intention form} of [user registration]. In the actual business, for example, the {entity} of the {intention form} in the [replenishment invoice] may include: {company name} {company tax number} {invoice receiving address}, etc. These are all customized based on the specific business. Next, the response information is routed to the client side.

The intention recognition module 730 is used to obtain the user intention based at least on the first information.

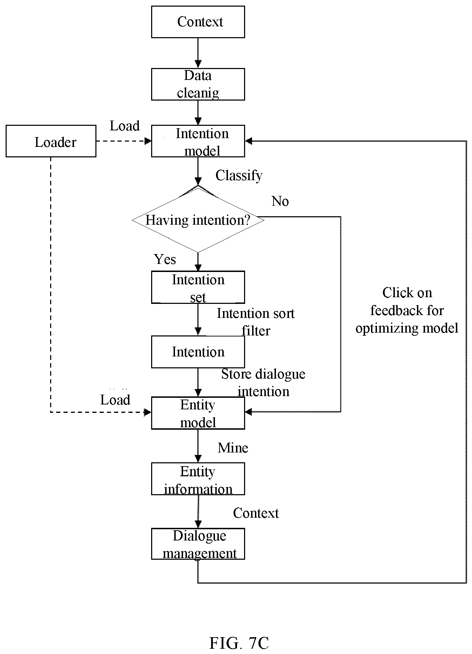

FIG. 7C schematically illustrates a logic diagram of an intention recognition module according to the embodiments of the present disclosure.

As shown in FIG. 7C, after a context is obtained, a data cleaning is performed, including but not limited to: word segmentation, stop word filtering, etc., and then an intention recognition model is requested. If the intention recognition model is not loaded, then the intention recognition model needs to be loaded through a loader, and it is determined whether there is a user intention based on the loaded intention recognition model. If there is a user intention, a set of user intentions are returned according to a preset threshold. Then, the set of user intentions are sorted, and the final user intention is selected. If the user intention has been identified or there is no user intention, then it is considered that the sentence may contain other entity information, and the entity information is extracted by an entity model.

It should be noted that the response information may also be returned to a dialogue management system. When the client service clicks on the answer, a feedback information is used to automatically optimize the intention recognition model.

The business model module 750 is used to determine a business process based at least on the first information and the user intention.

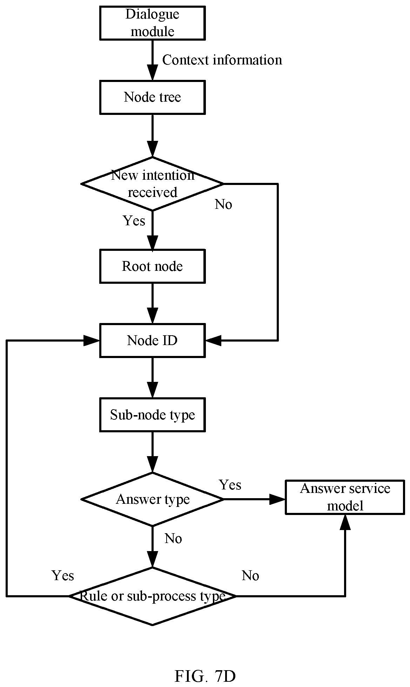

FIG. 7D schematically illustrates a logic schematic diagram of a business model module according to the embodiments of the present disclosure.

As shown in FIG. 7D, after the user intention is recognized, a context is used as an input parameter, and the business model module is requested. Each intention has a single value in a node tree, and the value is used to identify a node. The intention node is also called a root node. It should be noted that each time the first information transmitted by the client side is received, it should be determined whether to enter a new intention node (that is, whether to enter a root node of a node tree corresponding to a new business process). If it is determined to enter a new intention node, then the new root node is entered. If it is determined not to enter a new intention node, then a sub-node of the node tree of a previous first information is located. Then, according to a current node, a type of a sub-node under the node is determined, and the type of the node is divided into: the answer type, the rule type, the sub-process type (a general rule type, which is reusable) and a FAQ type. Then, if the type is the answer type, then an answer service model is directly called. If the type is the rule type or the sub-process type, then the hitted node is determined according to the rule, and then the node ID is returned. This process is a recursive process. If the type is not the above 3 types, then it is a FAQ type, and the answer service model is directly called. FAQ is generally a polite reply or a recommended answer.

The answer module 770 is used to determine the response information for the first information based on the business process and the entity information.

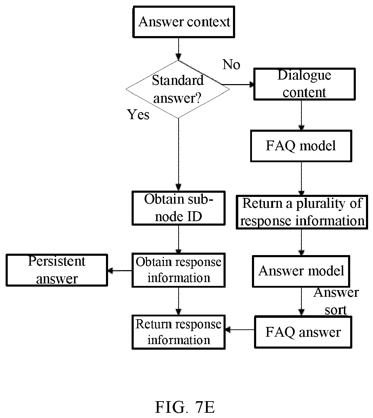

FIG. 7E schematically illustrates a logic diagram of an answer module according to the embodiments of the present disclosure.

As shown in FIG. 7E, the answer type or the FAQ type is determined by a context of the response message. If the type is the answer type, then a final response information is obtained from the cache according to a node ID, and the node ID is returned by a sub-node of a business model. The response information is stored in a persistent answer layer after manual editing and review, and each node ID corresponds to an answer. If the type is not the answer type, it is the FAQ type. Specifically, the content of the first information is vectorized, and the FAQ model is used to make a (question-answer pair) text similarity determination, and TOP N pieces (greater than a preset threshold) of candidate response information are retrieved, and then a candidate answer data is reordered by the answer model, and one or more response information is selected according to a threshold and routed to the client service side.

In addition, the system 700 may further include an intelligent scheduling module 790, and the intelligent scheduling module 790 is used to establish a connection between the client side and the client service side.

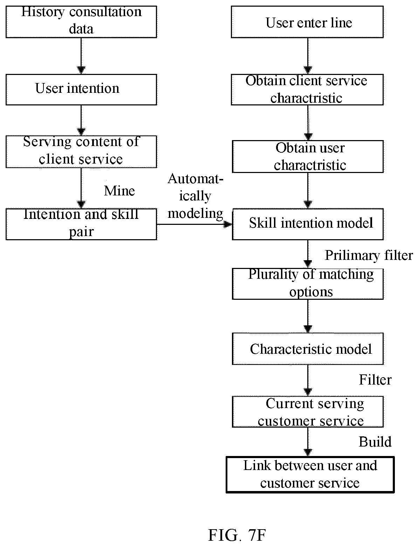

FIG. 7F schematically illustrates a logic schematic diagram of an intelligent scheduling module according to the embodiments of the present disclosure.

As shown in FIG. 7F, when the first information is received, first, it is needed to determine which client service recepts the user corresponding to the first information. At this time, the user does not make a dialogue after entering the line, or the user provides a sentence with no actual intention. Since a real-time user intention of the current user may not be obtained, the user intention is predicted through a history information of the user. The user intention and the serving content of the client service in the history information are used to find a matching relationship between the intention and skill. First, a client service characteristic is obtained. The client service characteristic is mainly composed of client service portraits, such as a resolution rate of history reception users, an emotion changing curve of history reception users, a history satisfaction degree of the client service and a skill group tag where the client service is good at answering, etc. And a user characteristic is obtained, the user characteristic is mainly composed of user portraits, including history consultation intentions, basic personal information, etc. Then, at least part of the characteristic related to the consultation, such as: a last consultation content, a recent order, an abnormal order, whether the client is a sensitive client, etc., is selected from the history data. The skill intention model is used to predict a question that the user may consult and to predict the user intention. It is determined what skill the client service may be needed corresponding to the problem and the predicted user intention. A plurality of groups of qualified reception client services are selected. Then, the current serving client service is determined by the characteristic model based on the client service characteristic, the user characteristics, the predicted user intention and the needed skill. In this way, a network link between the user and the client service may be established. After the link is established, the user and the client service may transmit information with each other.

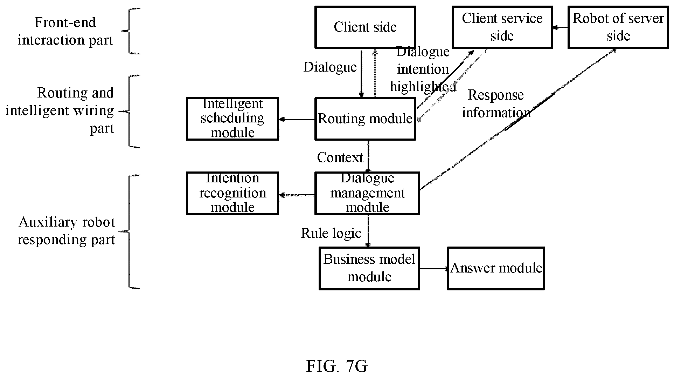

FIG. 7G schematically illustrates a schematic diagram of an information flow of a system of processing information according to the embodiments of the present disclosure.

As shown in FIG. 7G, the system of processing information may include a front-end interaction part, a routing and intelligent wiring part and a server determining response information part. The front-end interaction part includes a client side, a client service side and an auxiliary robot, the routing and intelligent wiring part includes an intelligent scheduling module and a routing module, and the server determining response information part includes an intention recognition module, a dialogue management module, a business model module and an answer module.

The routing module delivers messages between the client side and the client service side, and a user intention contained in a message delivered to the client service side may be marked, such as highlighted. In addition, the routing module establishes a link between the client side and the client service side based on a client service assigned by the intelligent scheduling module. When the routing module receives the first information, the first information and the context information of the first information is transmitted to the dialogue management module, the dialogue management module calls the intention recognition module to obtain the user intention based on at least the first information, the user intention is transmitted to the business recognition module, and the business recognition module determines a node tree of a business process corresponding to the user intention based on a rule logic and so on. The answer module is used to determine a response information for the first information based on the node tree and the entity information.

According to the embodiments of the present disclosure, any number of modules, sub-modules, units and sub-units, or at least part of functions thereof, may be implemented in one module. Any one or more of modules, sub-modules, units and sub-units according to the embodiments of the present disclosure may be split into a plurality of modules for implementation. Any one or more of modules, sub-modules, units and sub-units according to the embodiments of the present disclosure may be at least partially implemented as hardware circuits, such as field programmable gate array (FPGA), programmable logic array (PLA), system on chip, system on substrate, system on package, application specific integrated circuit (ASIC), or it may be implemented by hardware or firmware in any other reasonable way that integrates or encapsulates the circuit, or it is implemented by any one of software, hardware, and firmware or an appropriate combination thereof. Alternatively, one or more of the modules, sub-modules, units, and sub-units according to the embodiments of the present disclosure may be at least partially implemented as a computer program module, and when the computer program module is executed, the corresponding function may be performed.

For example, any two or more of the first receiving module 611, the intention obtaining module 613, the business process determining module 615, the entity information obtaining module 617 and the response information determining module 619 may be combined into one module, or any one of these modules may be split into a plurality of modules. Alternatively, at least part of the functions of one or more of these modules may be combined with at least part of the functions of other modules and implemented in one module. According to the embodiments of the present disclosure, at least one of the first receiving module 611, the intention obtaining module 613, the business process determining module 615, the entity information obtaining module 617 and the response information determining module 619 may be at least partially implemented as a hardware circuit, such as field programmable gate array (FPGA), programmable logic array (PLA), system on chip, system on substrate, system on package, application specific integrated circuit (ASIC), or it may be implemented by hardware or firmware in any other reasonable way that integrates or encapsulates the circuit, or implemented by any one of software, hardware, and firmware, or an appropriate combination thereof. Alternatively, at least one of the first receiving module 611, the intention obtaining module 613, the business process determining module 615, the entity information obtaining module 617 and the response information determining module 619 may be at least partially implemented as a computer program module. When the computer program module is executed, the corresponding function may be performed.

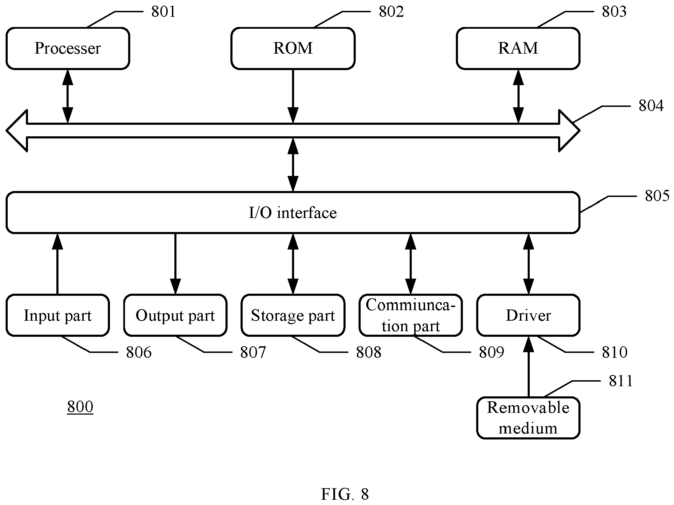

FIG. 8 schematically illustrates a block diagram of a computer system suitable for implementing information processing according to the embodiments of the present disclosure. The computer system shown in FIG. 8 is only an example, and should not have any limitation to the function and scope of the embodiments of the present disclosure.

As shown in FIG. 8, the computer system 800 according to the embodiments of the present disclosure includes a processor 801, which may perform various appropriate actions and processes according to a program stored in a read only memory (ROM) 802 or a program loaded from a storage part 808 into a random access memory (RAM) 803. The processor 801 may include, for example, a general-purpose microprocessor (for example, a CPU), an instruction set processor and/or a related chipset and/or a special-purpose microprocessor (for example, an application specific integrated circuit (ASIC)) and so on. The processor 801 may also include an on-board memory for caching purposes. The processor 801 may include a single processing unit or multiple processing units for performing different actions of the method flow according to the embodiments of the present disclosure.

In the RAM 803, various programs and data required for the operation of the system 800 are stored. The processor 801, the ROM 802 and the RAM 803 are connected to each other through a bus 804. The processor 801 perfroms various operations of the method flow according to the embodiments of the present disclosure by performing programs in the ROM 802 and/or RAM 803. It should be noted that the program may also be stored in one or more memories other than the ROM 802 and the RAM 803. The processor 801 may also perform various operations of the method flow according to the embodiments of the present disclosure by performing programs stored in the one or more memories.

According to the embodiments of the present disclosure, the system 800 may further include an input/output (I/O) interface 805, and the input/output (I/O) interface 805 is also connected to the bus 804. The system 800 may also include one or more of the following components connected to the I/O interface 805: an input part 806 including a keyboard, a mouse, etc.; an output part 807 including such as a cathode ray tube (CRT), a liquid crystal display (LCD), a speaker, etc.; a storage part 808 including a hard disk, etc.; and a communication part 809 including a network interface card such as a LAN card, a modem, etc. The communication part 809 performs communication processing through a network such as the Internet. A driver 810 is also connected to the I/O interface 805 as required. A removable medium 811, such as a magnetic disk, an optical disk, a magneto-optical disk, a semiconductor memory, etc., is installed on the driver 810 as required, so that the computer program read therefrom is installed into the storage part 808 as required.

According to the embodiments of the present disclosure, the method flow according to the embodiments of the present disclosure may be implemented as a computer software program. For example, the embodiments of the present disclosure include a computer program product, which includes a computer program carried on a computer-readable storage medium, and the computer program contains program codes for implementing the method shown in the flowchart. In such the embodiments, the computer program may be downloaded and installed from the network through the communication part 809, and/or installed from the removable medium 811. When the computer program is executed by the processor 801, it executes the above mentioned functions defined in the system of the embodiments of the present disclosure. According to the embodiments of the present disclosure, the systems, devices, apparatuses, modules, units, etc. described above may be implemented by computer program modules.

According to the present disclosure, there is also provided a computer-readable storage medium. The computer-readable storage medium may be included in the device/apparatus/system described in the above mentioned embodiments; or it may exist alone without being assembled into the apparatus/device/system. The above mentioned computer-readable storage medium carries one or more programs, and when the above mentioned one or more programs are executed, the method according to the embodiments of the present disclosure is implemented.

According to the embodiments of the present disclosure, the computer-readable storage medium may be a non-volatile computer-readable storage medium, for example, may include but not limited to: portable computer disk, hard disk, random access memory (RAM), read-only memory (ROM) , erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that contains or stores a program, and the program may be used by or in combination with an instruction execution system, apparatus, or device. For example, according to the embodiments of the present disclosure, the computer-readable storage medium may include the ROM 802 and/or RAM 803 and/or one or more memories other than ROM 802 and RAM 803 described above.

The flowcharts and block diagrams in the drawings illustrate the possible implementation architecture, functions, and operations of the system, method and computer program product according to various embodiments of the present disclosure. In this regard, each block in the flowchart or block diagram may represent a module, program segment, or part of codes, and the above mentioned module, program segment, or part of codes contains one or more executable instructions for implementing specified logic function. It should also be noted that, in some alternative implementations, the functions marked in the block may also occur in a different order from the order marked in the drawings. For example, two blocks shown in succession may actually be executed substantially in parallel, and the blocks may sometimes be executed in a reversed order, depending on the functions involved. It should also be noted that each block in the block diagram or flowchart, and the combination of blocks in the block diagram or flowchart, may be implemented by a dedicated hardware-based system that performs the specified functions or operations, or may be implemented by a combination of dedicated hardware and computer instructions.

Those skilled in the art may understand that the features described in the various embodiments of the present disclosure and/or the claims may be combined and/or incorporated in various ways, even if such combinations or incorporations are not explicitly described in the present disclosure. In particular, without departing from the spirit and teachings of the present disclosure, the various embodiments of the present disclosure and/or the features described in the claims may be combined and/or incorporated in various ways. All these combinations and/or incorporations fall within the scope of the present disclosure.

The embodiments of the present disclosure have been described above. However, these examples are for illustrative purposes only, and are not intended to limit the scope of the present disclosure. Although the respective embodiments are described above, this does not mean that the measures in the respective embodiments may not be advantageously used in combination. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. A method of processing information, applying to a server side, wherein the server side is communicatively connected to a client side and a client service side respectively, and the method comprises:
receiving a first information from the client side;
performing a semantic understanding on the first information in response to the first information received, so as to obtain a user intention;
determining a business process corresponding to the user intention;
obtaining, from the first information and a context information of the first information, an entity information, wherein the entity information is related to the business process corresponding to the user intention; and
determining a response information for the first information based on the entity information and the business process corresponding to the user intention and transmitting the response information to the client service side.

2. The method of claim 1, wherein determining and outputting the response information for the first information comprises:
building a node tree for each business process, wherein a root node of the node tree corresponds to a user intention;
determining a type of the root node in the node tree and using the root node as a current node, wherein the type of the root node comprises one of: an answer type, a rule type, a sub-process type and a common response type;
repeating following steps until a type of the current node is the answer type or the common response type:
determining a sub-node based on at least one of the entity information, a rule and a sub-process in response to the type of the current node being the rule type or the sub-process type, and using the sub-node as the current node; and
determining the type of the current node; and
obtaining a response information for the current node and outputting the response information for the current node to the client service side.

3. The method of claim 2, wherein the obtaining a response information for the current node and outputting the response information for the current node to the client service side comprises:
obtaining the response information from a first answer database based on an identifier of the current node in response to the type of the current node being the answer type, and outputting the response information; and
vectorizing the first information in response to the type of the current node being the common response type, so as to obtain a vectorized first information; using the vectorized first information to match in a second answer database, so as to obtain and output at least one response information.

4. The method of claim 1, further comprising:
obtaining a history data of a user of the first information after receiving the first information transmitted from the client side;
obtaining a user characteristic of the history data of the user;
obtaining a predicted intention and/or a predicted skill of the user based on the user characteristic;
determining a current serving client service from a plurality of client services based on a client service characteristic and at least one of the user characteristic, the predicted intention and the predicted skill; and
transmitting the first information to the current serving client service.

5. The method of claim 4, wherein the history data of the user of the first information comprises at least one of: a last consultation content, a recent order, an abnormal order and whether the user is a sensitive customer.

6. A method of processing information, applying to a client service side, wherein the client service side is communicatively connected to a server side and a client side respectively, and the method comprises:
receiving a first information and a response information transmitted from the server side, wherein the response information is generated by the server side based on a user intention, an entity information and a business process, the business process corresponds to the user intention of the first information, and the entity information is obtained from the first information and a context information of the first information and the entity information is related to the business process;
displaying the first information and the response information;
receiveing a client service operation; and
transmitting the response information or an information input by a client service to the client side in response to the client service operation.

7. The method of claim 6, further comprising:
transmitting at least one of the first information, the response information or the information input by the client service to the server side after outputting the response information or the information input by the client service, so that the server side analyzes a client service characteristic of a current serving client service.

8. An apparatus of processing information, comprising:
a first receiving module configured to receive a first information from a client side;
an intention obtaining module configured to perform a semantic understanding on the first information in response to the first information received, so as to obtain a user intention;
a business process determining module configured to determine a business process corresponding to the user intention;
an entity information obtaining module configured to obtain, from the first information and a context information of the first information, an entity information, wherein the entity information is related to the business process corresponding to the user intention; and
a response information determining module configured to determine a response information for the first information based on the entity information and the business process corresponding to the user intention and transmit the response information to the client service side.

9. The apparatus of claim 8, further comprising:
a history data obtaining module configured to obtain a history data of a user of the first information after receiving the first information transmitted from the client side;
a user characteristic obtaining module configured to obtain a user characteristic of the history data of the user;
a prediction module configured to obtain a predicted intention and/or a predicted skill of the user based on the user characteristic;
a matching module configured to determine a current serving client service from a plurality of client services based on a client service characteristic and at least one of the user characteristic, the predicted intention and the predicted skill; and
a routing module configured to transmit the first information to the current serving client service.

10. An apparatus of processing information, comprising:
a second receiving module configured to receive a first information and a response information transmitted from a server side, wherein the response information is generated by the server side based on a user intention, an entity information and a business process, the business process corresponds to the user intention of the first information, and the entity information is obtained from the first information and a context information of the first information and the entity information is related to the business process;
a display module configured to display the first information and the response information;
an operation receiving module configured to receive a client service operation; and
an information output module configured to transmit the response information or an information input by a client service to a client side in response to the client service operation.

11. A system of processing information, comprising:
a dialogue management module configured to obtain a first information, a context information of the first information and an entity information and output a response information for the first information;
an intention recognition module configured to obtain a user intention based at least on the first information;
a business model module configured to determine a business process based at least on the first information and the user intention;
an answer module configured to determine the response information for the first information based on the business process and the entity information.

12. A computer system, comprising:
one or more processors;
a storage device configured to store an executable instruction, wherein the executable instruction, when executed by the processor, implements the method of any one of claims 1 to 7.

13. A computer-readable storage medium having an executable instruction stored thereon, wherein the instruction, when executed by a processor, implements the method of any one of claims 1 to 7.
